# EUROPÄISCHE PATENTSCHRIFT

(11) **EP 1 667 423 B1**
(45) Veröffentlichungstag und Bekanntmachung des Hinweises auf die Patenterteilung: **11.03.2009**
(21) Anmeldenummer: 04106256.3
(22) Anmeldetag: 02.12.2004
(51) Int. Cl.: H04N 1/387, A47F 10/00, A47G 1/00, G02B 27/00

(54) **Verfahren und System zur Wiedergabe des Bildes einer Person**
Method and system for displaying the image of a person
Procédé et système pour afficher l'image d'une personne

(43) Veröffentlichungstag der Anmeldung: 07.06.2006
(73) Patentinhaber: Swisscom Mobile AG, 3050 Bern (CH)
(72) Erfinder: Lauper, Eric, 3014 Bern (CH); Ritter, Rudolf, 3052 Zollikofen (CH)
(74) Vertreter: P&TS Patents & Technology Surveys SA

(56) Entgegenhaltungen:
- WO-A-01/27818
- WO-A1-20/04047060
- WO-A2-20/04013676
- DE-A1- 10 056 291
- DE-A1- 19 635 753
- US-A- 6 154 321
- US-A1- 2002 060 649
- US-A1- 2004 163 105
- "Virtual retinal display technology" DIGITAL AVIONICS SYSTEMS CONFERENCE, 1998. PROCEEDINGS., 17TH DASC. THE AIAA/IEEE/SAE BELLEVUE, WA, USA 31 OCT.-7 NOV. 1998, NEW YORK, NY, USA,IEEE, US, Bd. 1, 31. Oktober 1998 (1998-10-31), Seiten D35 1-D35 6, XP010318056 ISBN: 0-7803-5086-3
- THOMAS M. LIPPERT, VOYTEK ANDRON, THOMAS E. SANKO: "Overview of Light Beam Scanning Technology for Automotive Projection Displays" 1. Juli 2003 (2003-07-01), Bothell WA Gefunden im Internet: URL:http://web.archive.org/web/20030701072 654/microvision.com/pdfs/sid_auto.pdf> [gefunden am 2008-05-26]

## Beschreibung

### Technisches Gebiet

Die Erfindung bezieht sich auf ein Verfahren zur Wiedergabe des Bildes einer Person mit einem Virtual Retinal Display gemäss dem unabhängigen Verfahrensanspruch und auf ein Virtual Retinal Display zur Wiedergabe des Bilder einer Person gemäss dem unabhängigen Vorrichtungsanspruch.

### Stand der Technik

Es sind aus dem Stand der Technik verschiedene Verfahren und Systeme bekannt, um eine Person zu erkennen und ihr persönliche Informationen zu unterbreiten. WO-A1-2004/047060 beispielsweise offenbart einen Spiegel, welcher mit einem Gesichtserkennungssystem und einem in den Spiegel integrierten Display ausgestattet ist. Anhand von mit einer Kamera aufgenommenen Bildern wird im Erkennungssystem eine Person erkannt. Aus einem Speicher werden Daten, die der erkannten Person zuzuordnen sind, hervorgeholt und der Person auf einem in dem Spiegel integrierten Display vorgespielt. Wenig vorteilhaft ist bei diesem System jedoch, dass das die Person persönlich erkannt werden muss und es nicht möglich ist, einer bestimmten Personengruppe ein beliebiges auf diese Personengruppe zugeschnittenes Programm vorzuspielen. Es ist aus WO-A1-2004/047060 nachteilig ebenfalls nicht bekannt, den Spiegel selbst als Display zu verwenden, sondern es ist notwendig, in den Spiegel an einer bestimmten Stelle ein Display zu integrieren. Weiter sind auch keine speziellen Displays aus der Patentanmeldung bekannt, die direkt die Daten direkt auf die Netzhaut des Auges des Beobachters projiziert. Ein vergleichbares System ist aus der Anmeldung WO-A1-03/005177 bekannt.

Das Patent US-A-6,560,027 offenbart einen Spiegel, welcher gleichzeitig als Display dienen kann. In diesem Modus werden E-Mails und Informationen angezeigt oder es kann der Terminkalender einer Person abgerufen werden. Nachteilig ist in diesem System keine Erkennung einer sich vor dem Spiegel befindenden Person möglich.

Die Patentanmeldung DE-A1-196 35 753 offenbart eine Bilderzeugungsvorrichtung, die ein virtuelles Bild einer bekleideten Person erzeugt, die einem Benutzer ähnelt und bestimmte ausgewählte Kleidungsstücke trägt. Ferner ist aus dieser Patentanmeldung ein Verfahren zur Erzeugung der für die Darstellung erforderlichen virtuellen Puppen und Kleidungsstücke bekannt.

Ein in einen Badezimmerspiegel integriertes Fernsehgerät offenbart die Japanische Offenlegungsschrift JP-A-2 285 172. Aus WO 00/14941 ist eine reflektierende Anzeige für ein Handy bekannt, welches durch ein elektrisches Signal in eine reflektierende Oberfläche verwandelt werden kann.

### Darstellung der Erfindung

Es ist Aufgabe der vorliegenden Erfindung, ein Verfahren und eine Vorrichtung zu schaffen, mit welcher eine Person sich selbst in veränderter oder unveränderter Form sehen kann, so zum Beispiel in einer anderen Umgebung oder in einer anderen Bekleidung. Es soll zusätzlich möglich sein, der Person ein speziell auf eine Personengruppe zugeschnittenes Werbe-, Informations- oder Unterhaltungsprogramm oder eine personengebundene Datei vorzuspielen.

Die Aufgabe wird durch ein Verfahren zur Wiedergabe eines Bildes einer Person mit einem Virtual Retinal Display gemäß Anspruch 1 gelöst.

Die Aufgabe wird auch durch ein System zur Wiedergabe des Bildes einer Person gemäß Anspruch 12 gelöst .

Vorteilhaft kann sich die Person mit dem erfindungsgemässen Verfahren selbst in veränderter oder unveränderter Weise sehen. Dies kann beim Einkauf in einem Kaufhaus sein, wobei die Person sich mit einer neuen Brille, mit anderen Kleidern oder in einem ausgewählten Wohnzimmer oder Büro sieht. Ist das System interaktiv ausgestattet, kann die Person durch einfache Änderungen die Umgebung oder die Bekleidung verändern und erhält so verbesserte Entscheidungskriterien beispielsweise beim Kauf von Möbeln oder Bekleidungsstücken. Da die Person die Bekleidungsstücke nicht notwendigerweise anziehen muss, sondern das Bild in einer Auswerteeinheit erzeugt wird, können ohne grossen Aufwand eine Vielzahl von Änderungen virtuell erzeugt werden. Da das Gerät sehr klein und auch tragbar ist, kann es überall problemlos und platzsparend aufgestellt und verwendet werden. In Kaufhäusern entfallen so vorteilhaft grosse Spiegel, die die ganze Person wiedergeben können. Das erfindungsgemässe Verfahren kann beispielsweise auch in Verbindung mit Spielkonsolen verwendet werden, wobei sich die Person selbst in einer virtuellen Welt wiederfindet und mit anderen Personen interagiert. Auch der Einsatz des Verfahrens bei einer Videokonferenz mit Geschäftspartnern ist möglich. Das System kann interaktiv ausgebildet sein und die Person kann es über eine Sprach- oder Sensoreingabe, über eine virtuelle Tastatur oder durch Bewegungen der Augen steuern.

Basierend auf der Erkennung der sich vor dem virtuellen Spiegel betrachtenden Person kann zusätzlich ein Werbe-, Informations- oder Unterhaltungsprogramm vorgespielt werden. Kann die Person nicht persönlich bestimmt werden und wird lediglich eine Kategorie wie jung, mittel-alt, alt, männlich, weiblich, lange, kurze Haare, Kind, etc. festgestellt, wird ein für diese Kategorie zugeschnittenes Werbe-, Informations- oder Unterhaltungsprogramm bereitgestellt. Durch die Aufnahme der biometrischen Merkmale des Gesichts, wie der Iris oder der Retina der Person ist es aber auch möglich, die Person persönlich zu identifizieren, oder eine vermutete Identität zu authentifizieren, und ihr zusätzlich zu dem eigenen Bild personengebundene Nachrichten wie Emails, etc. oder ein bevorzugtes Unterhaltungsprogramm vorzuspielen. In einer anderen Ausführungsform weiss das System durch Erfahrung, welche Informationen eine Person bevorzugt und wird diese entsprechend wiedergeben. In der gleichen Weise sind die biometrische Erkennung und die Authentifizierung der Person gegenüber einem Dienst oder einem Objekt möglich.

Das erfindungsgemässe System kann vielseitig eingesetzt werden und zwar im öffentlichen, wie im privaten Raum. Es hat den Vorteil, dass im allgemeinen Fall Werbung und Informationen gezielt auf eine Personenkategorie gestreut werden kann. Im privaten Raum kann das System gezielt auf Personen derart trainiert werden, dass ein individuell auf den Menschen zugeschnittenes Programm dargestellt werden kann. Menschen, die für ihre eigene Pflege vor dem Spiegel einige Zeit aufwenden, haben in der Regel ebenfalls Zeit, sich zumindest während der betreffenden Aktivität das genannten Fernsehprogramm, Internetdaten, Werbung, Informationen oder ein Unterhaltungsprogramm anzusehen.

Das erfindungsgemässe Verfahren und das erfindungsgemässe System sind vorteilhaft vielseitig in Verbindung mit einem bestehenden Broadcast-, Fix- oder Mobilnetz einsetzbar, über welche nicht nur Werbe-, Informations- oder Unterhaltungsprogramme, sondern auch Internetdateien, Bilder, etc. heruntergeladen werden können. Es ist auch denkbar, das aufgenommene Bild der Person an einem Fernserver zu senden und in einer Auswerteeinheit, die Teil des Fernservers ist, zu bearbeiten und zu verändern. Das veränderte Bild wird dann durch das Kommunikationsnetz zum Virtual Retinal Display gesendet und ist für den Benutzer sichtbar.

In einer vorteilhaften Ausführungsform sind Virtual Retinal Display, Bildaufnahmesensor und die Auswerteinheit in einem Mobilgerät, beispielsweise in einem Mobiltelefon, oder sogar auf einem einzigen Chip, der über eine autonome Stromversorgung verfügt, integriert. Der Benutzer des Mobilgeräts kann also mit dem Gerät selber an einer Videokonferenz, an einem Videospiel, etc. ohne weiteres teilnehmen und sieht neben den Gesprächspartnern oder Spielteilnehmern sich selbst.

### Kurze Beschreibung der Figuren

Die Erfindung wird anhand der beigefügten Figuren näher erläutert, wobei
- Fig. 1: eine erste Ausführungsform eines erfindungsgemässen Systems zeigt, welches einen Spiegel mit einem integrierten Scanner und mit einem integrierten Virtual Retinal Display zeigt, wobei das System mit einem Broadcastnetz verbunden ist, und
- Fig. 2: eine zweite Ausführungsform eines erfindungsgemässen Systems darstellt, wobei das System mit einem Mobilfunknetz verbunden ist.

Es werden nur die für das Verständnis der Erfindung wichtigen Elemente dargestellt. Gleiche Elemente werden in unterschiedlichen Figuren gleich bezeichnet.

### Wege zur Ausführung der Erfindung

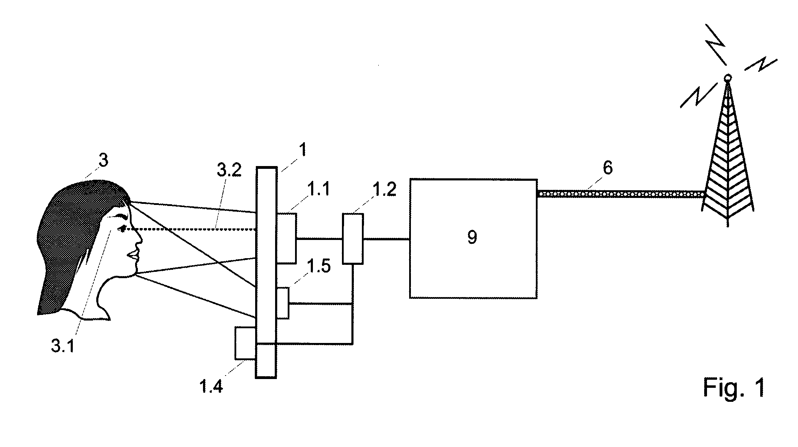

Die Figur 1 zeigt ein erstes Ausführungsbeispiel, mit welchem das erfindungsgemässe Verfahren durchgeführt werden kann. Eine Person befindet sich dabei vor einem virtuellen Spiegel 1. In diesem virtuellen Spiegel 1 ist ein Bildaufnahmesensor 1.5 und ein Virtual Retinal Display 1.1 integriert. Die Funktion des Bildaufnahmesensors kann durch das Virtual Retinal Display 1.1 selbst wahrgenommen werden, es kann sich aber auch um einen Teil des virtuellen Spiegels 1 handeln. Wenn das Virtual Retinal Display 1.1 selbst als Bildaufnahmesensor 1.5 dient, ist es mit einem Lichtsensor zusätzlich zur Leuchtdiode ausgestattet. Bei dem Bildaufnahmesensor 1.5 kann es sich um einen Matrix-Sensor, zum Beispiel um einen ccD-Sensor oder einen scannenden Sensor, handeln. Es ist denkbar, dass ein Laser die Person oder das Gesicht der Person infrarot (oder mit Licht einer anderen Wellenlänge) beleuchtet und eine Kamera oder ein Sensor das Bild der Person aufnimmt.

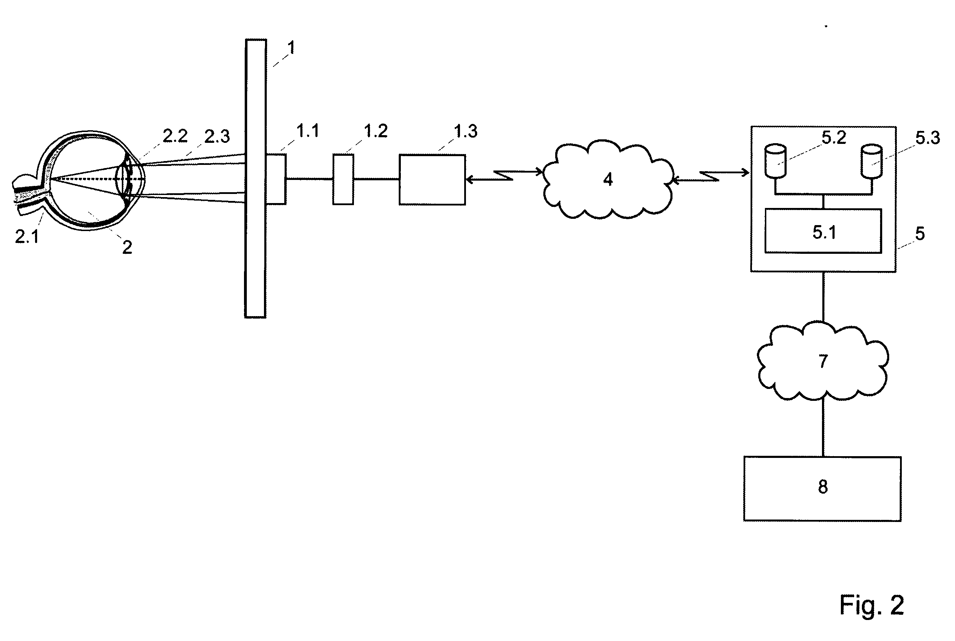

Entsprechend der vorliegenden Erfindung wird zunächst eine Person vor einem virtuellen Spiegel 1 mit dem Bildaufnahmesensor 1.5 aufgenommen. In der Ausführungsform der Fig. 1 ist nur das Gesicht der Person dargestellt und es wird nur das Gesicht 3.1 aufgenommen. Der Bildaufnahmesensor 1.5 kann aber auch eine Aufnahme der ganzen Person machen oder nur die Iris 2.2 oder die Retina 2.1 aufnehmen (vgl. Fig. 2). Das aufgenommene Bild der Person wird unmittelbar danach in veränderter oder unveränderter Form mit einem Virtual Retinal Display 1.1 direkt auf die Retina 2.1 der Person wiedergegeben bzw. projiziert. Dies ist in der Fig. 1 durch die Projektion 3.2 dargestellt. Das "unmittelbar danach" bezieht die Zeit, die für die Bildverarbeitung und -modifikation durch die Auswerteeinheit 1.2 notwendig ist, mit ein. Solche VRD-Vorrichtungen werden unter anderem von der Firma Microvision angeboten und haben den Vorteil, dass sie stark miniaturisiert werden können und einen geringen Stromverbrauch aufweisen. Zur Veränderung oder Bearbeitung des Bildes ist an das Virtual Retinal Display 1.1 und den Bildaufnahmesensor 1.5 eine Auswerteinheit 1.2 angeschlossen. Die Auswerteeinheit 1.2 ist beispielsweise ein normaler PC, ein Linux- oder Symbian-System, in welchem eine entsprechende Bildverarbeitungssoftware die Bildauswertung und -veränderung vornimmt. Damit die Auswerteeinheit 1.2 das Bild der Person richtig erstellt oder berechnet, wird es notwendig sein, dass sich das Virtual Retinal Display 1.1 und der Bildaufnahmesensor 1.5 in einem feststehenden Winkel zueinander befinden.

Es kann sich bei dem virtuellen Spiegel 1 um einen richtigen Spiegel mit einer (mindestens teilweisen) reflektieren Oberfläche handeln. Für ein Virtual Retinal Display 1.1 ist dies jedoch nicht unbedingt notwendig. Auch ein kleines, tragbares Gerät oder ein Chip, auf welchem ein Bildaufnahmesensor 1.5, eine Auswerteeinheit 1.2 und ein Virtual Retinal Display 1.1 integriert werden können, sind denkbar. Eine solche Ausführungsform ist platzsparender, weil das Display selber wesentlich kleiner ist, als das projizierte Bild, welches einen ganzen Raum wiedergeben kann. Es können auch wesentlich grössere Bilder damit aufgenommen werden. Es ist zudem billiger als bisher bekannte, im Stand der Technik beschriebene Spiegel, in die ein Display integriert worden ist. Um autonom wirken zu können, wird es über eine Stromversorgung verfügen. Es muss somit separat eingeschaltet werden, damit es als Spiegel funktioniert.

Damit die Wiedergabe des Bildes präzis auf die Retina 2.1 projiziert werden kann, wird es notwendig sein, die Position des Auges oder der Bewegungen des Auges zu überwachen und zu verfolgen und bei der Wiedergabe des Bildes durch das Virtual Retinal Display 1.1 die festgestellte Position zu berücksichtigen. Nur so kann das Bild exakt wiedergegeben werden.

Vorteilhaft kann sich die Person mit dem erfindungsgemässen Verfahren selbst in veränderter oder unveränderter Weise sehen. Dies kann beim Einkauf in einem Kaufhaus sein, wobei die Person sich mit einer neuen Brille, mit anderen Kleidern oder in einem ausgewählten Wohnzimmer oder Büro sieht. Da die Person die Bekleidungsstücke nicht notwendigerweise anziehen muss, sondern das Bild in einer Auswerteinheit 1.2 erzeugt wird, können in kurzer Zeit eine Vielzahl von Änderungen virtuell erzeugt werden. Da das Gerät sehr klein sein kann, kann es überall ohne Probleme aufgestellt bzw. verwendet werden. In Kaufhäusern entfallen so vorteilhaft grosse Spiegel, die die ganze Person wiedergeben können. Das erfindungsgemässe Verfahren kann beispielsweise auch in Verbindung mit Spielkonsolen verwendet werden, wobei sich die Person selbst in einer virtuellen Welt wiederfindet und mit anderen Personen interagiert.

Wie in der Fig. 1 sichtbar kann an die Auswerteeinheit 1.2 ein Modul 1.4 zur Sprach- oder Sensoreingabe oder eine virtuelle Tastatur (welche die Bewegungen der Finger aufnimmt) angeschlossen sein. Auch eine Interaktion durch Bewegungen der Augen (Blinzeln, Gucken in eine bestimmte Ecke für eine bestimmte Zeit, Schielen, etc.) oder durch Bewegungen, die von Körperteilen (Hände, Arme, etc.) durchgeführt werden, ist denkbar. Das System ist so interaktiv und die Person kann durch einfache Anweisungen die Umgebung oder die Bekleidung verändern und erhält so verbesserte Entscheidungskriterien beispielsweise beim Kauf von Möbeln oder Bekleidungsstücken. Auch eine Videokonferenz mit Geschäftspartnern ist durch das erfindungsgemässe Verfahren interaktiv möglich. In einer weiteren Ausführungsform ist das Virtual Retinal Display 1.1 in einer Brille integriert, während der Bildaufnahmesensor 1.5 kein Teil dieser Brille ist, sondern ausserhalb der persönlichen Brille angeordnet ist.

In einer weiteren Ausführungsform wird eine Person durch das aufgenommene Bild zwar nicht persönlich bestimmt oder erkannt, es wird aber in der Auswerteeinheit 1.2 eine Kategorie (jung, mittel-alt, alt, männlich, weiblich, lange, kurze Haare, Kind, etc.) festgestellt, die der Person zuzuordnen ist. Es wird dann ein für diese ermittelte Kategorie zugeschnittenes Werbe-, Informations- oder Unterhaltungsprogramm bereitgestellt und zusätzlich zu dem eigenen Bild durch das Virtual Retinal Display 1.1 projiziert. Zu diesem Zweck ist die Auswerteeinheit 1.2 in der Fig. 1 zusätzlich über einen Broadcastempfänger 9 an ein Broadcastnetz 6 angeschlossen. Über das Broadcastnetz 6 ist es einfach möglich, Daten zu empfangen. Ein solches Verfahren kann vielseitig eingesetzt werden und zwar im öffentlichen, wie im privaten Raum. Es hat den Vorteil, dass im allgemeinen Fall Werbung und Informationen gezielt auf eine Personenkategorie gestreut werden kann.

Das dargestellte Bild kann an den Inhalt angepasst werden. Es ist somit nicht notwendig, ein rechteckiges Bild zu projizieren. Vielmehr kann auch das Bild mit dem Umriss der Person aufhören. In der Auswerteeinheit 1.2 muss zu diesem Zweck eine Erkennung der Körperteile vorgenommen werden. So ist es möglich, nur die Augen oder andere Körperteile darzustellen und als Hintergrund die normale Umgebung zu haben. Die projizierte Form des Bildes wird automatisch oder manuell verändert. Sind verschiedene Kameras vorhanden, die eine Person aus verschiedenen Winkeln aufnehmen, ist auch die Darstellung eines dreidimensionalen Bildes möglich. Für die Darstellung eines dreidimensionalen Bildes sind zwei Virtual Retinal Displays 1.1 oder nur eine Virtual Retinal Display 1.1 notwendig, welches ein Bild je Auge wiedergibt.

Die Fig. 2 zeigt eine zweite Ausführungsform mit dem das erfindungsgemässe Verfahren durchgeführt werden kann. Ein virtueller Spiegel 1 ist wieder mit einem Virtual Retinal Display 1.1 verbunden. In der Fig. 2, in welcher nur das Auge 2 der Person dargestellt ist, ist es möglich, die Person durch die Scannung des Gesichts, der Retina 2.1 oder Iris 2.2 der Person persönlich zu identifizieren. Die Aufnahme wird in diesem Fall von dem Virtual Retinal Display 1.1 selbst vorgenommen. Ist die Person in der mit dem Virtual Retinal Display 1.1 verbundenen Auswerteeinheit 1.2 authentifiziert worden, können weitere Funktionen aktiviert werden. So ist es möglich, dem Benutzer zusätzlich zu dem eigenen Bild individuelle und personenabhängige Nachrichten (Emails, Nachrichten entsprechend eines Benutzerprofils, etc.) oder ein von der Person bevorzugtes Unterhaltungsprogramm, etc. vorzuspielen. Im privaten Raum kann das System gezielt auf Personen derart trainiert werden, dass ein individuell auf den Menschen zugeschnittenes Programm dargestellt werden kann. Menschen, die für ihre eigene Pflege vor dem Spiegel einige Zeit aufwenden, haben in der Regel ebenfalls Zeit, sich zumindest während der betreffenden Aktivität das genannten Werbe- oder Informationsprogramm anzusehen. In einer vorteilhaften Ausführungsform weiss das System durch Erfahrung, welche Informationen eine Person bevorzugt und wird diese entsprechend wiedergeben.

Weiter ist es denkbar, das erfindungsgemässe Verfahren als Werbeplakat zu verwenden. So wird zunächst der Benutzer durch sein eigenes Bild auf sich aufmerksam. Danach wird werden zusätzliche Werbeblöcke eingespielt, die den Benutzer über Produkte, Dienstleistungen, etc. informieren. Am Ende werden die Benutzer durch die Art und Weise der Präsentation der Information überrascht sein und werden das oder die Produkte leichter käuflich erwerben.

Es ist auch denkbar, dass die Person durch die Erkennung des Gesichts 3.1, der Retina 2.1, der Iris 2.2 oder auf andere Weise biometrisch identifiziert wird, um sich so gegenüber einem Dienst (Anruf, gesicherte Dateien, etc.) oder einem Objekt (Sicherheitsschleuse, Zugang zu gesperrten Bereichen in Gebäuden, etc.) zu authentifizieren.

In der Fig. 2 sind die Auswerteeinheit 1.2 über eine Kommunikationseinheit 1.3 mit einem Mobilfunknetz 4 verbunden. Das Ausführungsbeispiel ist keineswegs auf ein Mobilfunknetz 4 beschränkt, es kann sich auch um ein anderes, geeignetes Kommunikationsnetz, ein Fixnetz, das Internet, etc. handeln. Das Mobilfunknetz 4 ist mit einem Server 5 verbunden. Auf dem Server 5 ist eine Datenbank 5.1, Kundendaten 5.2, eine Anbieterverwaltung 5.3, etc. vorhanden. Auf diese Weise kann ein Anbieter 8 eines Werbe- oder Informationsprogramms, welcher ebenfalls über ein Kommunikationsnetz 7 mit dem Server 5 verbunden ist, die gewünschten Daten bereitstellen. Der Anbieter 8 wird also Anbieter eines genannten Werbe-, Informations-, oder Unterhaltungsprogramms für bestimmte Ziel- oder Interessengruppen sein oder er kann personengebundene Kundendaten 5.2, wie Emails, etc. verwalten.

In dieser Ausführungsform ist es auch denkbar, das aufgenommene Bild der Person auf den Server 5 zu senden und in einer Auswerteeinheit, die Teil des Servers 5 ist, zu bearbeiten und zu verändern. Das veränderte Bild wird dann durch das Kommunikationsnetz zum Virtual Retinal Display 1.1 gesendet und ist für den Benutzer sichtbar.

In einer vorteilhaften Ausführungsform sind die genannten Elemente, Virtual Retinal Display 1.1, Bildaufnahmesensor 1.5 und die Auswerteinheit 1.2 in einem Mobilgerät, beispielsweise in einem Mobiltelefon, integriert und/oder mit einem Mobiltelefon verbunden. Alle Elemente können auch in einem einzigen Modul, welcher über eine eigene Stromversorgung verfügt, integriert sein. Der Benutzer des Mobilgeräts kann also mit dem Gerät selber an einer Videokonferenz, an einem Videospiel, etc. ohne weiteres teilnehmen und sieht neben den Gesprächspartnern oder Spielteilnehmern sich selbst.

### Bezugszeichenliste

- 1: Virtueller Spiegel
- 1.1: Virtual Retinal Display
- 1.2: Auswerteeinheit
- 1.3: Kommunikationseinheit
- 1.4: Modul zur Sprach- und/oder Sensoreingabe
- 1.5: Bildaufnahmesensor
- 2: Menschliches Auge
- 2.1: Retina
- 2.2: Iris
- 2.3: Projektion des Bildes
- 3: Kopf
- 3.1: Gesicht
- 3.2: Projektion des Bildes
- 4: Mobilfunknetz
- 5: Server
- 5.1: Datenbank
- 5.2: Kundendaten
- 5.3: Anbieterverwaltung
- 6: Broadcastnetz
- 7: Kommunikationsnetz
- 8: Anbieter eines Werbe- oder Informationsprogrammes
- 9: Broadcastempfänger

## Patentansprüche

1. Verfahren zur Wiedergabe des Bildes einer Person mit einem Virtual Retinal Display (1.1), **gekennzeichnet durch** die folgenden Verfahrensschritte
- ein Bild einer Person oder eines Teils einer Person wird mit einem Bildaufnahmesensor (1.5) kontinuierlich aufgenommen und
- unmittelbar danach wird das aufgenommene Bild der Person in veränderter oder unveränderter Form mit dem Virtual Retinal Display (1.1) direkt auf die Retina (2.1) der Person wiedergegeben, wobei
- die Person anhand des aufgenommenen Bildes in einer Auswerteeinheit (1. 2) kategorisiert wird und ein Fernsehprogramm, Internetdaten, Werbung, Informationen oder ein Unterhaltungsprogramm entsprechend der Kategorisierung ausgesucht und der Person zusätzlich zu dem Bild vorgespielt wird.

2. Verfahren nach Anspruch 1, **dadurch gekennzeichnet, dass** nur das Gesicht (3) der Person aufgenommen wird.

3. Verfahren nach Anspruch 1 oder 2, **dadurch gekennzeichnet, dass** die Person in einer anderen Umgebung oder in einer anderen Bekleidung dargestellt wird.

4. Verfahren nach einem der Ansprüche 1 bis 3, **dadurch gekennzeichnet, dass** das Bild von einem Matrix-Sensor aufgenommen wird.

5. Verfahren nach einem der Ansprüche 1 bis 4, **dadurch gekennzeichnet, dass** das Virtual Retinal Display (1.1) lokal oder über ein Broadcast-, Fix- oder Mobilnetz (4, 6, 7) mit einer Datenverarbeitungseinheit verbunden ist und der Person zusätzlich zu dem aufgenommenen Bild eine auf dem Datenverarbeitungseinheit vorhandene Datei vorgespielt wird.

6. Verfahren nach einem der Ansprüche 1 bis 5, **dadurch gekennzeichnet, dass** als Kategorie der Person jung, mittel-alt, alt, männlich, weiblich, lange, kurze Haare oder Kind festgestellt wird.

7. Verfahren nach einem der Ansprüche 1 bis 6, **dadurch gekennzeichnet, dass** die Person durch Erkennung des Gesichts (3), der Retina (2.1) oder der Iris (2.2) erkannt wird, um sich gegenüber einem Dienst oder einem Objekt zu authentifizieren.

8. Verfahren nach einem der Ansprüche 1 bis 6, **dadurch gekennzeichnet, dass** die Person durch Erkennung des Gesichts (3), der Retina (2.1) oder der Iris (2.2) erkannt wird und der Person zusätzlich zu dem aufgenommenen Bild eine personenabhängige Datei vorgespielt wird.

9. Verfahren nach Anspruch 8, **dadurch gekennzeichnet, dass** als personengebundene Datei das Bild eines Gesprächpartners während einer Videokonferenz vorgespielt wird.

10. Verfahren nach einem der Ansprüche 1 bis 9, **dadurch gekennzeichnet, dass** das Verfahren in einer Spielkonsole verwendet wird.

11. Verfahren nach einem der Ansprüche 1 bis 10, **dadurch gekennzeichnet, dass** die Darstellung des Bildes und/oder von anderen dargestellten Daten über eine Sprach- oder Sensoreingabe, über eine virtuelle Tastatur oder über Augenbewegungen von der Person gesteuert wird.

12. System zur Wiedergabe des Bildes einer Person, wobei ein Bildaufnahmesensor (1.5) mit einer elektronischen Auswerteeinheit (1.2) zur Auswertung eines kontinuierlich aufgenommenen Bildes der Person verbunden ist und das Virtual Retinal Display (1.1) mit der Auswerteeinheit (1.2) zur Wiedergabe des Bildes an die Person verbunden ist, wobei die Person in der Auswerteeinheit (1.2) anhand des aufgenommenen Bildes kategorisierbar ist und ein Fernsehprogramm, Internetdaten, Werbung, Informationen oder ein Unterhaltungsprogramm entsprechend der Kategorisierung aussuchbar und der Person zusätzlich zu dem Bild vorspielbar ist.

13. System gemäss Anspruch 12, **dadurch gekennzeichnet, dass** sich der Bildaufnahmesensensor (1.5) und das Virtual Retinal Display (1.1) in einem einzigen Modul befinden.

14. System gemäss einem der Ansprüche 12 oder 13, **dadurch gekennzeichnet, dass** das Virtual Retinal Display (1.1) und der Bildaufnahmesensor (1.5) in einem Mobilgerät, vorzugsweise einem Mobiltelefon, integriert sind und/oder mit dem Mobilgerät verbunden sind.

15. System gemäss einem der Ansprüche 12 bis 14, **dadurch gekennzeichnet, dass** ein Modul (1.4) zur Sprach- und/oder Sensoreingabe oder eine virtuellen Tastatur mit der Auswerteinheit (1.2) verbunden ist.

16. System gemäss einem der Ansprüche 12 bis 15, **dadurch gekennzeichnet, dass** das das Virtual Retinal Display (1.1) lokal oder über ein Broadcast-, Fix- oder Mobilnetz (4, 6, 7) mit einer Datenverarbeitungseinheit verbunden ist, die abzuspielende Dateien enthält.

17. System gemäss Anspruch 16, **dadurch gekennzeichnet, dass** die abzuspielende Datei das Bild eines Gesprächpartners während einer Videokonferenz enthält.

18. System gemäss einem der Ansprüche 12 bis 17, **dadurch gekennzeichnet, dass** als Kategorie der Person jung, mittel-alt, alt, männlich, weiblich, lange, kurze Haare oder Kind festgestellt wird.

## Claims

1. Method for reproducing the image of a person with a Virtual Retinal Display (1.1), **characterized by** the following method steps:
- the image of a person or part of a person is recorded continuously with an image recording sensor (1.5), and
- immediately afterwards, the recorded image of the person is reproduced in modified or unchanged form with a Virtual Retinal Display (1.1) directly onto the person's retina (2.1), wherein.
- the person is categorized from the recorded image in an analysis unit (1.2) and a television program, internet data, advertising, information or entertainment program is chosen according to the category and is played to the person in addition to the image.

2. Method according to claim 1, **characterized in that** only the face (3) of the person is recorded.

3. Method according to claim 1 or 2, **characterized in that** the person is represented in another environment or in another clothing.

4. Method according to one of the claims 1 to 3, **characterized in that** the image is recorded by a matrix sensor.

5. Method according to one of the claims 1 to 4, **characterized in that** the Virtual Retinal Display (1.1) is connected locally or over a broadcast, fixed or mobile network (4, 6, 7) with a data processing unit and **in that** a data file available on the data processing unit is played to the person in addition to the recorded image.

6. Method according to one of the claims 1 to 5, **characterized in that** as category of the person is young, middle-aged, added, male, female, long, short hairs or child recognized.

7. Method according to one of the claims 1 to 6, **characterized in that** the person is recognized through recognition of the face (3), the retina (2.1) or the iris (2.2) in order to be authenticated vis-à-vis a service or an object.

8. Method according to one of the claims 1 to 6, **characterized in that** the person is recognized through recognition of the face (3), the retina (2.1) or the iris (2.2) and a person-dependent data file is played to the person in addition to the recorded image.

9. Method according to claim 8, **characterized in that** as person-linked data file, the image of a conversation partner during a video conference is played.

10. Method according to one of the claims 1 to 9, **characterized in that** the method is used in a game console.

11. Method according to one of the claims 1 to 10, **characterized in that** the representation of the image and/or of other represented data is controlled by the person over a voice or sensor command, over a virtual keyboard or through eye movements.

12. System for reproducing the image of a person, wherein an image recording sensor (1.5) is connected with an electronic analysis unit (1.2) for analyzing a recorded image of the person and the Virtual Retinal Display (1.1) is connected with the analysis unit (1.2) for reproducing the image, whereby the person is categorizable from the recorded image in an analysis unit (1.2) and a television program, internet data, advertising, information or entertainment program is chosen according to the category and is played to the person in addition to the image.

13. System according to claim 12, **characterized in that** the image recording sensor (1.5) and the Virtual Retinal Display (1.1) are in a single module.

14. System according to one of the claim 12 or 13, **characterized in that** the Virtual Retinal Display (1.1) and the image recording sensor (1.5) are integrated in a mobile device, preferably a mobile telephone, and/or connected with the mobile device.

15. System according to one of the claims 12 to 14, **characterized in that** a module (1.4) for voice and/or sensor command or a virtual keyboard is connected with the analysis unit (1.2).

16. System according to one of the claims 12 to 15, **characterized in that** the Virtual Retinal Display (1.1) is connected locally or over a broadcast, fixed or mobile network (4, 6, 7) with a data processing unit containing data files to be played.

17. System according to claim 16, **characterized in that** the data file to be played contains the image of a conversation partner during a video conference.

18. System according to one of the claims 12 to 17, **characterized in that** as category of the person is young, middle-aged, added, male, female, long, short hairs or child recognized.

## Revendications

1. Procédé pour afficher l'image d'une personne au moyen d'un affichage rétinien virtuel (1.1), **caractérisé par** les étapes de procédé suivantes:
- une image d'une personne ou d'une partie d'une personne est enregistrée de façon continue au moyen d'un détecteur de prises de vues (1.5) et
- immédiatement après, l'image enregistrée de la personne est reproduite sous forme modifiée ou inchangée au moyen de l'affichage rétinien virtuel (1.1) directement sur la rétine (2.1) de la personne,
- la personne étant catégorisée dans une unité d'évaluation (1.2) et, sur la base de l'image enregistrée, un programme de télévision, des données d'Internet, de la publicité, des informations ou un programme de divertissement sont sélectionnés en fonction de la catégorisation et montrés à la personne en sus de l'image.

2. Procédé selon la revendication 1, **caractérisé en ce que** seul le visage (3) de la personne est enregistré.

3. Procédé selon la revendication 1 ou 2, **caractérisé en ce que** la personne est représentée dans un autre environnement ou dans une autre tenue vestimentaire.

4. Procédé selon l'une des revendications 1 à 3, **caractérisé en ce que** l'image est enregistrée par un détecteur matriciel.

5. Procédé selon l'une des revendications 1 à 4, **caractérisé en ce que** l'affichage rétinien virtuel (1.1) est relié localement ou au travers d'un réseau de diffusion, d'un réseau fixe ou d'un réseau mobile (4, 6, 7) avec une unité de traitement de données, et un fichier disponible sur l'unité de traitement de données est montré à la personne en sus de l'image enregistrée.

6. Procédé selon l'une des revendications 1 à 5, **caractérisé en ce qu'**en tant que catégorie, la personne est détectée comme jeune, entre deux âges, âgée, de sexe masculin, de sexe féminin, avec cheveux longs, avec cheveux courts ou enfant.

7. Procédé selon l'une des revendications 1 à 6, **caractérisé en ce que** la personne est identifiée par reconnaissance du visage (3), de la rétine (2.1) ou de l'iris (2.2) afin d'être authentifiée envers un service ou un objet.

8. Procédé selon l'une des revendications 1 à 6, **caractérisé en ce que** la personne est identifiée par reconnaissance du visage (3), de la rétine (2.1) ou de l'iris (2.2) et qu'un fichier lié à la personne est montré à la personne en sus de l'image enregistrée.

9. Procédé selon la revendication 8, **caractérisé en ce que**, en tant que fichier lié à la personne, l'image d'un interlocuteur pendant une conférence vidéo est montrée.

10. Procédé selon l'une des revendications 1 à 9, **caractérisé en ce que** le procédé est utilisé dans une console de jeux.

11. Procédé selon l'une des revendications 1 à 10, **caractérisé en ce que** la représentation de l'image et/ou d'autres données représentées est contrôlée par la personne au travers d'une commande vocale ou sensorielle, au moyen d'un clavier virtuel ou par le biais de mouvements des yeux.

12. Système pour afficher l'image d'une personne, un détecteur de prises de vues (1.5) étant relié avec une unité électronique d'évaluation (1.2) pour évaluer une image enregistrée en continu d'une personne et un affichage rétinien virtuel (1.1) étant relié avec l'unité électronique d'évaluation (1.2) pour reproduire l'image à la personne, la personne pouvant être catégorisée dans une unité d'évaluation (1.2) sur la base de l'image enregistrée et un programme de télévision, des données d'Internet, de la publicité, des informations ou un programme de divertissement pouvant être sélectionnés en fonction de la catégorisation et montrés à la personne en sus de l'image.

13. Système selon la revendication 12, **caractérisé en ce que** le détecteur de prises de vues (1.5) et l'affichage rétinien virtuel (1.1) se trouvent dans un seul module.

14. Système selon l'une des revendications 12 ou 13, **caractérisé en ce que** l'affichage rétinien virtuel (1.1) et le détecteur de prises de vues (1.5) sont intégrés dans un appareil mobile, de préférence dans un téléphone mobile, et/ou sont reliés avec l'appareil mobile.

15. Système selon l'une des revendications 12 à 14, **caractérisé en ce qu'**un module (1.4) pour la commande vocale et/ou sensorielle ou un clavier virtuel est relié avec l'unité d'évaluation (1.2).

16. Système selon l'une des revendications 12 à 15, **caractérisé en ce que** l'affichage rétinien virtuel (1.1) est relié localement ou au travers d'un réseau de diffusion, d'un réseau fixe ou d'un réseau mobile (4, 6, 7) avec une unité de traitement de données qui contient le fichier à montrer.

17. Système selon la revendication 16, **caractérisé en ce que** le fichier à montrer contient l'image d'un interlocuteur pendant une conférence vidéo.

18. Système selon l'une des revendications 12 à 17, **caractérisé en ce que**, en tant que catégorie, la personne est détectée comme jeune, entre deux âges, âgée, de sexe masculin, de sexe féminin, avec cheveux longs, avec cheveux courts ou enfant.
